# EUROPEAN PATENT APPLICATION

(11) **EP 3 936 909 A1**
(43) Date of publication of application: **12.01.2022**
(21) Application number: 21184924.5
(22) Date of filing: 09.07.2021
(51) Int. Cl.: G02B 5/30, G02B 26/00

(54) **SWITCHABLE DIMMING ELEMENT AND SWITCHABLE POLARIZER**

(30) Priority: 10.07.2020 US 202063050649 P; 29.06.2021 US 202117362582
(71) Applicant: Facebook Technologies, LLC, Menlo Park, CA 94025 (US)
(72) Inventor: SEARS, Jasmine, Menlo Park, CA 94025 (US); GALEA, Christopher, Menlo Park, CA 94025 (US)
(74) Representative: Murgitroyd & Company

(57) **Abstract**

An optical element (200) includes a metal layer (250) and a transparent conductor layer (220). Strips of the metal layers (250) extend and curl based on a switching signal driven onto the transparent conductor layer (220) that controls a polarization attenuation of the optical element (200).

## Description

### TECHNICAL FIELD

This disclosure relates generally to optics, and in particular to dimming and polarization.

### BACKGROUND INFORMATION

A smart device is an electronic device that typically communicates with other devices or networks. In some situations the smart device may be configured to operate interactively with a user. A smart device may be designed to support a variety of form factors, such as a head mounted device, a head mounted display (HMD), or a smart display, just to name a few.

Smart devices may include one or more components for use in a variety of applications, such as gaming, aviation, engineering, medicine, entertainment, video/audio chat, activity tracking, and so on. In some examples, a smart device may include one or more optical elements.

### SUMMARY

According to a first aspect of the present disclosure, there is provided an optical device comprising:
a transparent conductor layer;
a driver module configured to drive a switching signal onto the transparent conductor layer, wherein the transparent conductor layer is configured to receive the switching signal; and
a metal layer configured to enter an extended state that increases a polarization-selective attenuation of the metal layer with respect to incident light when the switching signal is driven onto the transparent conductor layer.

The metal layer may be further configured to enter a curled state when the switching signal is not received by the transparent conductor layer, wherein, in the curled state, the cross-section of the metal layer with respect to the incident light is less than the cross-section of the metal layer in extended state of the metal layer, and wherein a greater percentage of the incident light propagates through the optical device when the metal layer is in the curled state compared to the extended state of the metal layer.

The metal layer may include a plurality of strips, and wherein the strips in the metal layer form chains of the strips in the extended state, and wherein the chains formed by the strips linearly polarize the incident light.

The incident light may be incident on the transparent conductor layer normal to a first plane of the transparent conductor layer.

The optical device may further comprise:
a transparent insulator layer disposed between the metal layer and the transparent conductor layer; and
a patterned adhesion layer disposed between the metal layer and the transparent insulator layer.

The driver module may be configured to modulate the switching signal to switch the metal layer between the extended state and a curled state to tune an average percentage of the incident light that propagates through the optical device.

The driver module may drive the switching signal so the metal layer stays in the curled state or the extended state for less than 50 ms.

The metal layer may include chromium.

According to a second aspect of the present disclosure, there is provided an optical element comprising:
a transparent conductor layer; and
a metal layer configured to form chains that linearly polarize incident light when a first voltage level is driven onto the transparent conductor layer, wherein the metal layer enters a transmissive state when a second voltage level is driven onto the transparent conductor layer, and wherein a higher percentage of the incident light propagates through the optical element in the transmissive state of the metal layer compared to the polarization state of the metal layer.

A plurality of strips of the metal layer may enter a curled state that reduces a cross-section of the strips with respect to the incident light when the metal layer is in the transmissive state.

The incident light may propagate normal to a first plane of the transparent conductor layer.

The optical element may further comprise:
a transparent insulator layer disposed between the metal layer and the transparent conductor layer; and
a patterned adhesion layer disposed between the metal layer and the transparent insulator layer.

According to a second aspect of the present disclosure, there is provided an optical device comprising:
a pixel driving module; and
a plurality of pixels, wherein the pixel driving module is configured to selectively drive each of the pixels in the plurality between a transmissive state and a polarization state, wherein each of the pixels in the plurality includes:
   a transparent conductor layer; and
   a metal layer configured to linearly polarize incident light when a first voltage level is driven onto the transparent conductor layer by the pixel driving module, and wherein the metal layer transmits a majority of the incident light when a second voltage level is driven onto the transparent conductor layer by the pixel driving module.

The metal layer may include a plurality of strips, and wherein the strips in the metal layer form chains of the strips when the first voltage level is driven onto the transparent conductor layer, and wherein the chains formed by the strips linearly polarize the incident light.

The optical device may further comprise:
a switchable polarizer layer, wherein lines of the switchable polarizer layer are disposed perpendicular to the chains formed by the strips.

The incident light may be incident normal to a first plane of the transparent conductor layer.

The optical device may further comprise:
a transparent insulator layer disposed between the metal layer and the transparent conductor layer; and
a patterned adhesion layer disposed between the metal layer and the transparent insulator layer.

The metal layer may include chromium.

The pixel driving module may be configured in an active-matrix configuration to actively drive each pixel in the plurality of pixels.

The pixel driving module may be configured in a passive-matrix configuration to drive each pixel in the plurality of pixels with voltages on voltage lines shared by the plurality of pixels.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.
FIG. 1 illustrates an example head-mounted device that may include a switchable optical element, in accordance with aspects of the present disclosure.
FIG. 2 illustrates an optical device that includes a drive module and an optical structure, in accordance with aspects of the disclosure.
FIGs. 3A-3D illustrate strips of a metal layer in different states, in accordance with aspects of the disclosure.
FIGs. 4A-5C illustrate how chains of metal strips may form in different states of an optical structure to selectively linearly polarize incident light, in accordance with aspects of the disclosure.
FIG. 6 illustrates an optical system that includes switchable polarizers, in accordance with aspects of the disclosure.
FIG. 7 illustrates an optical element having a pixel array that includes rows and columns of pixels, in accordance with aspects of the disclosure.
FIG. 8 illustrates an optical system having a first switchable polarizer layer and a second switchable polarizer layer, in accordance with aspects of the disclosure
FIG. 9 illustrates an optical system that includes switchable polarizers and a pixelated switchable polarization rotating layer, in accordance with aspects of the disclosure.

### DETAILED DESCRIPTION

Embodiments of switchable polarizer are described herein. In the following description, numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In some implementations of the disclosure, the term "near-eye" may be defined as including an element that is configured to be placed within 50 mm of an eye of a user while a near-eye device is being utilized. Therefore, a "near-eye optical element" or a "near-eye system" would include one or more elements configured to be placed within 50 mm of the eye of the user.

In aspects of this disclosure, visible light may be defined as having a wavelength range of approximately 380 nm - 700 nm. Non-visible light may be defined as light having wavelengths that are outside the visible light range, such as ultraviolet light and infrared light. Infrared light having a wavelength range of approximately 700 nm - 1 mm includes near-infrared light. In aspects of this disclosure, near-infrared light may be defined as having a wavelength range of approximately 700 nm - 1.4 µm.

In aspects of this disclosure, the term "transparent" may be defined as having greater than 90% transmission of light. In some aspects, the term "transparent" may be defined as a material having greater than 90% transmission of visible light.

Conventional polarizers are one type of dimming option for optical elements. However, conventional polarizers typically cannot exceed 50% transmission of unpolarized light. Aspects of the present disclosure provide a switchable polarizer for active dimming in an optical element. Some switchable polarizers of this disclosure have greater than 50% light transmission in the transmissive state. In some aspects, the switchable polarizer may also allow different dark state levels, as opposed to a binary clear/dark state.

In implementations of the disclosure, a switchable polarizer includes a metal layer and a transparent conductor layer. When a first voltage level is applied to the transparent conductor layer, strips of the metal layers form chains that linearly polarize light. In a transmissive state of the switchable polarizer, a second voltage level is applied to the transparent conductor layer and the strips of the metal layers curl which breaks the chains and reduces a cross-section of the strips with respect to incident light. This may allow for a device that can switch between (1) behaving like a wire-grid polarizer and (2) behaving like a slightly-tinted window. In some implementations, a head mounted device (e.g. glasses) includes a switchable polarizer that can be activated to selectively reduce glare (e.g. light reflecting off of water) without substantially dimming other scene light.

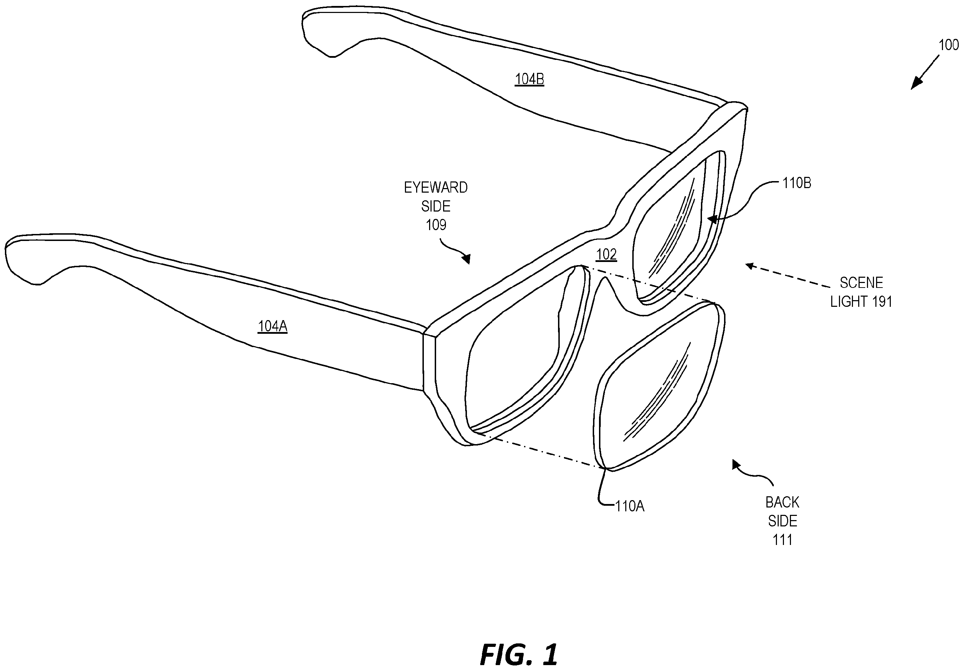

FIG. 1 illustrates an example head-mounted device 100 that may include a switchable polarizer, in accordance with aspects of the present disclosure. A head-mounted device, such as head-mounted device 100, is one type of smart device, typically worn on the head of a user to provide artificial reality content to a user. Artificial reality is a form of reality that has been adjusted in some manner before presentation to the user, which may include, e.g., virtual reality (VR), augmented reality (AR), mixed reality (MR), hybrid reality, or some combination and/or derivative thereof.

The illustrated example of head-mounted device 100 is shown as including a frame 102, temple arms 104A and 104B, and near-eye optical elements 110A and 110B.

FIG. 1 illustrates near-eye optical elements 110A and 110B that are configured to be mounted to the frame 102. In some examples, near-eye optical elements 110A and 110B may appear transparent to the user to facilitate augmented reality or mixed reality such that the user can view visible scene light 191 from the environment while also optionally receiving display light generated by a digital display (not explicitly shown in FIG. 1). In further examples, some or all of the near-eye optical elements 110A and 110B may be incorporated into a virtual reality headset where the transparent nature of the near-eye optical elements 110A and 110B allows the user to view an electronic display (e.g., a liquid crystal display (LCD), an organic light emitting diode (OLED) display, a micro-LED display, etc.) incorporated in the virtual reality headset.

In some implementations, near-eye optical elements 110A/110B may each include one or more optical layers and/or coatings. For example, near-eye optical element 110A may include an illumination layer, an optical combiner layer, a lens, a filter layer, and so on. The optional illumination layer may include one or more in-field light sources that are configured to emit non-visible light towards the eyeward side 109 for eye-tracking purposes. In other examples, head mounted device 100 may include one or more light sources disposed outside the field-of-view of the user, such around a periphery of the near-eye optical element 110A (e.g., incorporated within or near the rim of frame 102).

An optional filter layer of the near-eye optical element 110A may be configured to block non-visible light received from the backside 111. The optional lens of the near-eye optical element may have a curvature for focusing light (e.g., display light and/or scene light) to the eye of the user. The near-eye optical element 110A may also include an optional optical combiner layer that is configured to receive display light that is generated by a digital display and to direct the display light towards the eyeward side 109 for presentation to the user. In some aspects, the optical combiner layer is transmissive to visible light, such as scene light 191 incident on the backside 111 of the near-eye optical element 110A. In some examples, the optical combiner layer may be configured as a volume hologram and/or may include one or more diffraction gratings (e.g., Bragg, blazed, uniform, etc.) for directing the display light towards the eyeward side 109.

As shown in FIG. 1, frame 102 is coupled to temple arms 104A and 104B for securing the head-mounted device 100 to the head of a user. Example head-mounted device 100 may also include supporting hardware incorporated into the frame 102 and/or temple arms 104A and 104B. The hardware of head-mounted device 100 may include any of processing logic, wired and/or wireless data interfaces for sending and receiving data, graphic processors, and one or more memories for storing data and computer-executable instructions. In one example, head-mounted device 100 may be configured to receive wired power and/or may be configured to be powered by one or more batteries. In addition, head-mounted device 100 may be configured to receive wired and/or wireless data including video data.

A switchable polarizer, such as described herein, may be included in the near-eye optical element 110A and/or near-eye optical element 110B, in accordance with aspects of the present disclosure. A switchable polarizer may be used as a switchable global dimming element in near-eye optical element(s) 110. In some implementations, switchable pixels are incorporated into near-eye optical element(s) 110 where each pixel (or zone of pixels) is a switchable polarizer to provide polarization and/or dimming of particular pixels or zones of pixels in the near-eye optical element(s) 110.

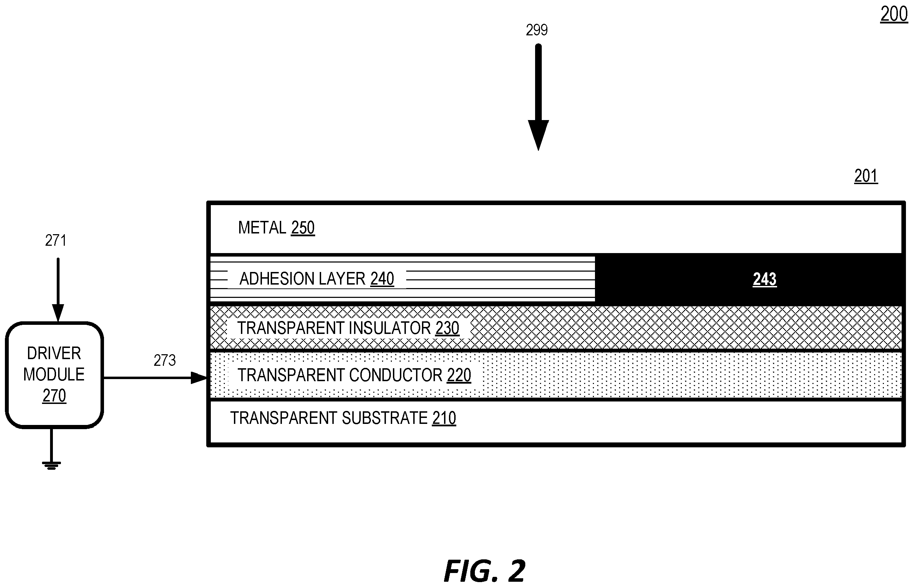

FIG. 2 illustrates an optical device 200 that includes a driver module 270 and an optical structure 201, in accordance with aspects of the present disclosure. Optical structure 201 includes a transparent substrate 210 (e.g. optical grade glass or optical grade plastic), a transparent conductor layer 220, a transparent insulator layer 230, a patterned adhesion layer 240, and metal layer 250. Driver module 270 is configured to drive a switching signal 273 onto the transparent conductor layer 220. In some implementations, driver module 270 is configured to modulate switching signal 273 in response to an input signal 271. For example, input signal 271 may be derived from an image to be driven onto a display of a head mounted device where image light from the display propagates through optical structure 201. In some implementations, switching signal 273 may be a voltage level or an electrical current level. In some implementations, a voltage level of the switching signal 273 is switched between a digital high (e.g. 3.3 VDC, 10 VDC, 100 VDC, 200 VDC, or 1,000 VDC) and a digital low (e.g. 0 VDC).

Transparent conductor layer 220 is configured to receive the switching signal 273. Transparent conductor layer 220 may include indium tin oxide (ITO) or other suitable transparent conductor. Transparent insulator layer 230 may be a transparent dioxide such as silicon dioxide. Transparent insulator layer 230 electrically isolates transparent conductor 220 from both adhesion layer 240 and metal layer 250.

Adhesion layer 240 may be an adhesive configured to bond metal layer 250 to transparent insulator layer 230. Metal layer 250 may be patterned to define metal strips that curl and uncurl (extend). Metal layer 250 may be made from (or include) chromium. Adhesion layer 240 may also be patterned to include voids 243 that allow portions of the strips of metal layer 250 to curl and uncurl (extend) in response to switching signal 273 (without the strips being adhered to the rest of optical structure 201). Adhesion layer 240 is disposed between metal layer 250 and transparent insulator 230, in the illustrated implementation of FIG. 2. Planes of transparent substrate layer 210, transparent conductor layer 220, transparent insulator layer 230, and adhesion layer 240 may all be parallel to each other. In FIG. 2, incident light 299 is incident normal to the planes of layers 210, 220, 230, and 240.

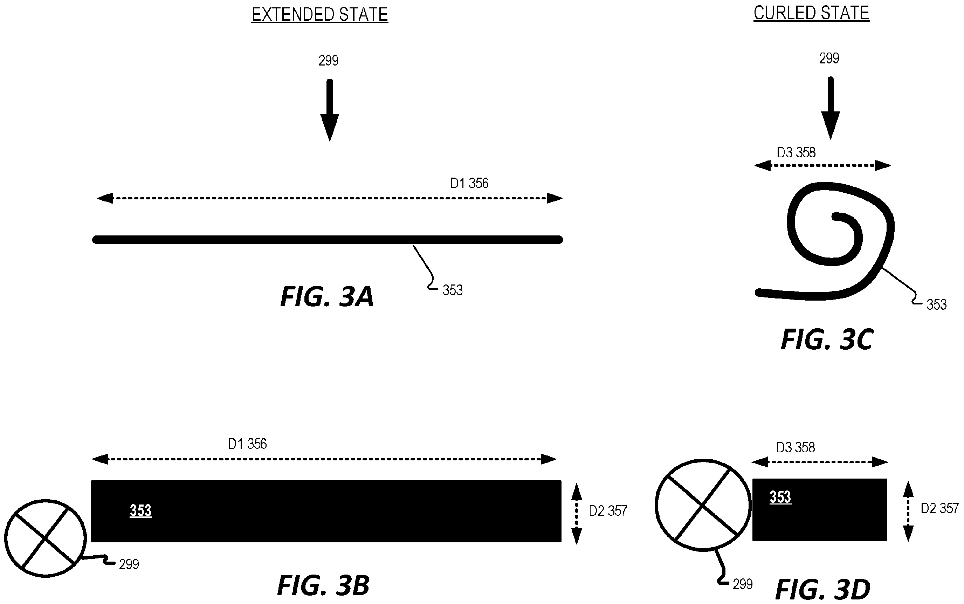

FIGs. 3A-3D illustrate strips 353 of the metal layer 250 in different states, in accordance with aspects of the disclosure. As described above, metal layer 250 may be patterned into strips 353. FIG. 3A illustrates a side view of a metal strip 353 in an extended state of optical structure 201. The extended state may reduce the transmission of light 299 polarized parallel to the length (D1 356) of the strip 353. The extended state may correspond with a polarization state that increases a cross-section of strips 353 in metal layer 250 with respect to incident light 299. Driver module 270 may drive optical structure 201 into the extended state by driving a voltage level (e.g. 3.3 VDC or 10 VDC) onto transparent conductor layer 220. Driving a voltage onto transparent conductor layer 220 may cause electrostatic force to drive metal strips 353 into the extended state. Notably, metal strip 353 has a cross-sectional length of dimension D1 356 with respect to incident light 299 in the extended state.

FIG. 3B illustrates a top view of metal strip 353 in the extended state where incident light 299 is propagating into the page. FIG. 3B shows that metal strip 353 has a width D2 357 and cross-sectional length D1 356. The width (D2 357) of metal strip 353 may be smaller than the wavelength of incident light 299.

FIG. 3C illustrates a side view of a metal strip 353 in a curled state of optical structure 201. The curled state may correspond with a transmissive state having a reduced cross-section of the strips 353 of metal layer 250 with respect to incident light 299. Driver module 270 may drive optical structure 201 into the curled state by driving a voltage level (e.g. 0 VDC) onto transparent conductor layer 220. Driving transparent conductor layer 220 to ground (0 VDC) may allow metal strips 353 to relax into a curled state. Notably, metal strip 353 has a cross-sectional length of dimension D3 358 with respect to incident light 299 in the curled state which is less than cross-sectional length D1 356 in the extended state.

FIG. 3D illustrates a top view of metal strip 353 in the curled state where incident light 299 is propagating into the page. FIG. 3D shows that metal strip 353 has a width D2 357 and cross-section length D3 358 that is less than cross-section length D1 356 of strip 353 in the extended state. Consequently, in the curled state, the cross-section of strips 353 in metal layer 250 is less than the cross-section of the strips 353 in metal layer 250 in the extended state. This allows driver module 270 to control dimming and polarization of optical structure 201 by modulating the switching signal (e.g. voltage) on transparent conductor layer 220. Therefore, the switching signal may increase or decrease a polarization-selective attenuation of the metal layer 250.

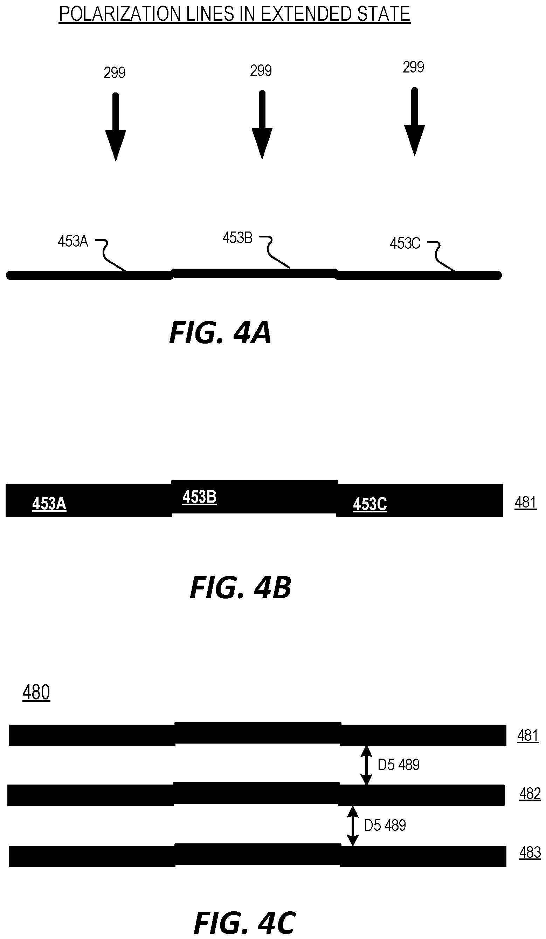

FIGs. 4A-5C illustrate how chains 481 of metal strips may form in the extended state of optical structure 201 to linearly polarize incident light 299, in accordance with aspects of the disclosure. Thus, implementations of this disclosure may modulate a dimming of optical structure 201 and a polarization of incident light 299.

FIG. 4A illustrates that a plurality of strips 453 may come into mechanical (and/or electrical) contact with each other in the extended state of metal layer 250. FIG. 4A is a side view of the strips 453A, 453B, and 453C (collectively referred to as strips 453) FIG. 4B illustrates a top view of metal strips 453A, 453B, and 453C coming into contact to form a chain 481. FIG. 4B illustrates that some strips (e.g. strip 453B) may be slightly offset from other strips while forming chain 481. FIG. 4C illustrates that a plurality of chains 481, 482, and 483 may form when metal layer 250 is in the extended state. The plurality of chains may be spaced apart by a distance D5 489. The distance D5 489 may be designed to polarize particular periods of incident light 299. FIG. 4C shows that a plurality of chains 480 formed by metal strips 453 in the extended state may function as wire-grid polarizer lines to incident light (propagating into the page in FIG. 4C).

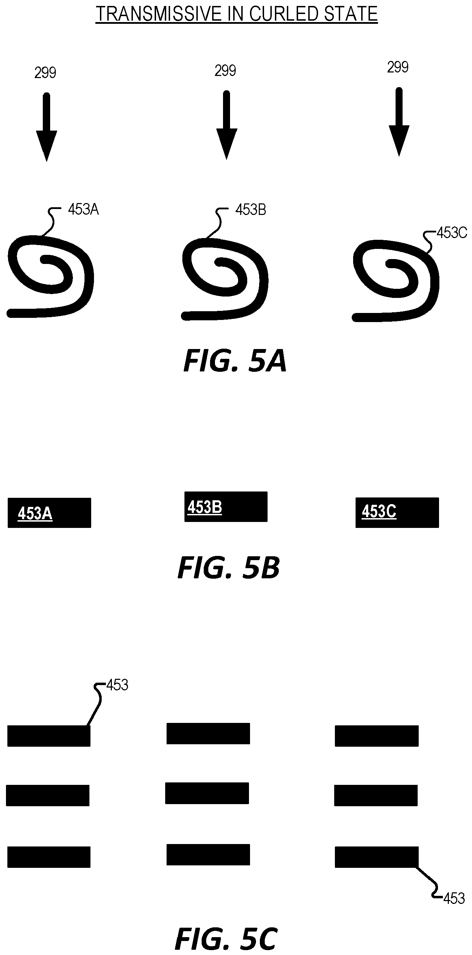

FIG. 5A illustrates a side view of the plurality of strips 453 that are not in contact with each other in a curled state of metal layer 250. FIG. 5B illustrates a top view of the plurality of strips 453 that are not in contact with each other in a curled state of metal layer 250.

FIG. 5C illustrates a top view of a plurality of strips 453 that do not form chains in a curled state of metal layer 250 and thus no polarization effect is imparted by strips 453 to incident light (propagating into the page). FIG. 5C illustrates that a cross-sectional area of metal layer 250 (in the curled state) is less than the cross-sectional area of metal layer 250 in the extended state illustrated in FIG. 4C. Consequently, a greater percentage of incident light 299 propagates through an optical device including the optical structure 201 when metal layer 250 is in the curled state compared to the extended state of the metal layer 250. In some contexts, the switching signal 273 driven by driver module 270 is 200 VDC and an absence of the switching signal 273 is considered to be another voltage level (e.g. 0 VDC).

In implementations of the disclosure, an optical element in the curled state may be approximately 90% transmissive. In some implementations, the curled state transmits the majority of incident light 299. Thus, the curled state of metal layer 250 may be referred to as the transmissive state of an optical element in this disclosure since the cross-section of the metal layer is reduced with respect to incoming incident light. In implementations of the disclosure, an optical element in the extended state would be approximately 15% transmissive. In some implementations, the extended state is approximately 40% transmissive. In some implementations, the extended state is approximately 50% transmissive. Thus, the extended state of the metal layer 250 may be referred to as the dark state of an optical element in this disclosure since the cross-section of the metal layer is increased with respect to incoming incident light. Furthermore, when metal strips 453 also form a plurality of chains (e.g. 481, 482, 483) that allow the optical element to function as a polarizer, the extended state of metal layer 250 may be referred to as the polarizing state of an optical element in this disclosure since the extended strips may form the chains that linearly polarize incident light 299. In implementations where strips 453 extend to form polarization chains 481, the extended state of strips 453 of metal layer 250 may be referred to as a dark state and a polarizing state.

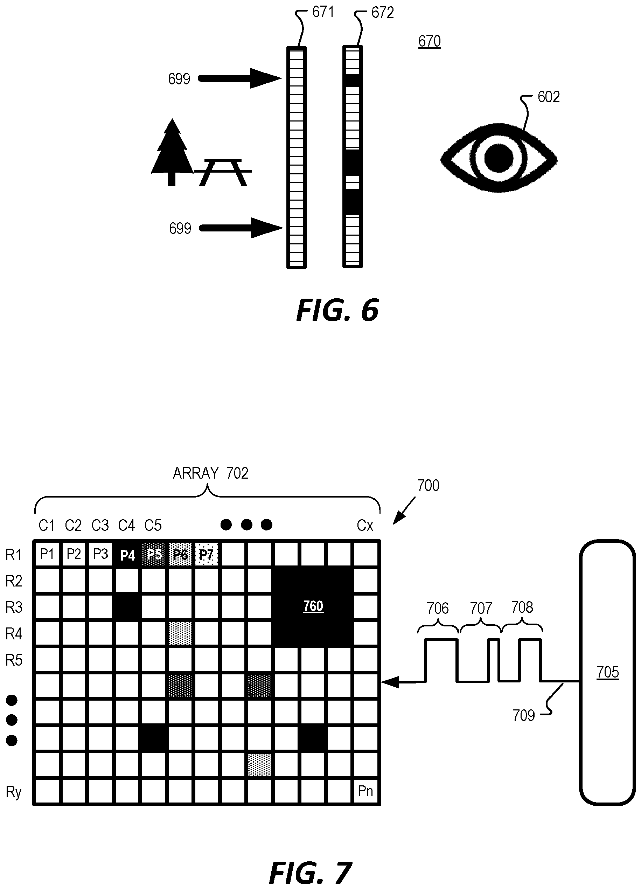

FIG. 6 illustrates an optical system 670 that includes switchable polarizers 671 and 672, in accordance with implementations of the disclosure. Switchable polarizer 671 and/or switchable polarizer 672 may be pixelated switchable polarizers. The orientation of the switchable polarizers 671 and 672 may be crossed so that when both switchable polarizers 671 and 672 are driven to their polarization state, light transmission is low (e.g. a first polarization state is blocked by element 671 and a second polarization orientation orthogonal to the first polarization state is blocked by element 672). Yet, when both switchable polarizers 671 and 671 are in the transmissive state, the maximum transmission of optical system 670 is greatly increased. In implementations where one or more of switchable polarizers 671 and/or 672 are pixelated, the switchable polarizers may include a plurality of pixels (or zones of pixels) that may be individually modulated between a transmissive state and a polarization state (which is also the dark state).

FIG. 7 illustrates an optical element 700 having a pixel array 702 that includes *x* columns and *y* rows of pixels, in accordance with aspects of the disclosure. Pixel array 702 includes pixels P1, P2, P3... Pn where *n* is an integer product of *x* and *y.* Pixels in pixel array 702 may be configured similarly to optical structure 201. Each pixel may be individually driven in an active-matrix configuration that includes one or more transistors for driving each pixel. In other implementations, a passive-matrix driving system is used to drive each pixel with voltages on voltage lines shared by rows (or columns) of pixels.

FIG. 7 illustrates that some pixels such as pixel P4 may be driven into a dark state while other pixels (e.g. Pixel P1, P2, and P3) are driven to a transmissive state. Zone 760 include nine pixels that are driven to the dark state. Thus, individual pixels or zones of the pixels may be driven to different states, in some implementations. Darkening particular pixels or zones of pixels may dim the scene light 699 that propagates to eye 602 for those pixels or zones of pixels. Display light from a head mounted display may be displayed in the darkened zones, in some examples.

FIG. 7 also illustrates that each pixel may be modulated, in time, to provide grey-scale driving functionality for each pixel. Signal 709 may be a switching signal driven by pixel driving module 705 using a time-multiplexed dimming technique. Of course, pixel driving module 705 may be driving a plurality of signals 709 (not illustrated) at the same time to drive multiple pixels simultaneously. Frames 706, 707, and 708 may have a time period of 10 ms, 100 us, or other time period fast enough where eye 602 will not notice modulation of the pixel during the time period of the frame. The pixel driving module 705 may drive the switching signal 709 so the metal layer 250 of any particular pixel stays in the curled state or the extended state for less than 50 ms so the human eye will not notice the time-multiplexed dimming implementation.

By way of example, in frame 708, signal 709 is voltage-level high for 50% of frame 708 and voltage-level low for 50% of the frame. Thus, the average transmission, in the frame time period, will be half way between the transmission of incident light in the transmissive state and the dark state. If the dark state is 20% transmissive and the transmissive state is 80% transmissive, the average light transmission in frame 708 will be approximately 50%. Pixel P6 may be driven to 50% transmission, for example.

In frame 707, signal 709 is voltage-level high (dark state) for 25% of frame 707 and voltage-level low (transmissive state) for 75% of the frame. If the dark state is 20% transmissive and the transmissive state is 80% transmissive, the average light transmission in frame 707 will be approximately 65%. Pixel P7 may be driven to 65% transmission, for example.

In frame 706, signal 709 is voltage-level high (dark state) for 80% of frame 706 and voltage-level low (transmissive state) for 20% of the frame. If the dark state is 20% transmissive and the transmissive state is 80% transmissive, the average light transmission in frame 707 will be approximately 32%. Pixel P5 may be driven to 32% transmission, for example.

Thus, frames 706, 707, and 708 are examples of modulating a signal 709 to switch a metal layer 250 of an optical structure 201 of a pixel between an extended state and a curled state to tune an average percentage of incident light that propagates through a pixel of the optical device. Of course, the example frames in FIG. 7 may also be applied to tuning an average percentage of light that propagates through an optical element that is implemented as a single (global) "pixel" of an optical element. For example, when an optical element 110 includes one of optical structure 201 that extends through the whole optical element 110, the optical structure 201 may be driven to fine-tune the average percentage of incident light that propagates through the optical element 110. In this example, the optical structure 201 may be implemented as sunglasses lenses that are tunable to a specified light transmission percentage.

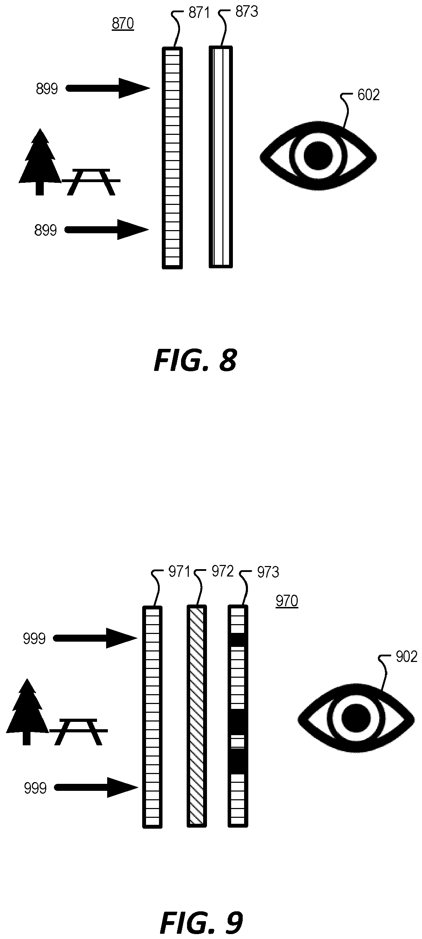

FIG. 8 illustrates an optical system 870 having a first switchable polarizer layer 871 and a second switchable polarizer layer 873, in accordance with aspects of the disclosure. First switchable polarizer layer 871 includes the optical structure 201 of FIG. 2. Second switchable polarizer layer 873 includes lines (e.g. wire-grid polarizing lines) that are disposed perpendicular (or nearly perpendicular) to the chains 481, 482, and 483 of first switchable polarizer layer 871. Disposing the lines of second switchable polarizer layer 873 perpendicular to chains of first switchable polarizer layer 871 may increase the percentage of incident light 899 that is blocked by optical system 870. Second switchable polarizer layer 873 may be a switchable polarizer. Second switchable polarizer layer 873 may include the optical structure 201 of FIG. 2 and first switchable polarizer layer 871 and second switchable polarizer layer 873 may be driven to a dark state (polarization state) at a same time to increase the percentage of incident light 899 that is blocked. When second switchable polarizer layer 873 includes optical structure 201, first switchable polarizer layer 871 and second switchable polarizer layer 873 may be driven to a transmissive state at a same time to increase the percentage of incident light 899 that propagates through optical system 870 to eye 602.

FIG. 9 illustrates an optical system 970 that includes switchable polarizers, in accordance with implementations of the disclosure. Optical system 970 includes a first switchable polarizer 971, a pixelated switchable polarization-rotating layer 972, and a second switchable polarizer 973. Switchable polarization-rotating layer 972 may be a switchable quarter-waveplate or a switchable half-waveplate, for example. Optical structure 201 may function as first switchable polarizer 971 and/or second switchable polarizer 973. Optical system 970 may be incorporated into a near-eye optical element (such as in near-eye optical element 110 in FIG. 1) to modulate the polarization of incident scene light 999 that propagates to eye 902. Using switchable polarizers instead of static polarizers increases the maximum transmission of scene light 999 to eye 902 as well as allowing optical system 970 to be selectively mostly transmissive (by way of the switching signal driven onto the switchable polarizers). Consequently, near-eye optical elements 110 don't necessarily appear dark in indoor environments where it would be desirable for the near-eye optical elements to appear in a transmissive (clear) state, for example.

In operation, the pixelated switchable polarization rotating layer 972 is driven to control the polarization state of the output light propagating towards switchable polarizer 973. For the pixels that are to appear dark, the pixels in pixelated switchable polarization-rotating layer 972 are driven so that the polarization orientation of the output light for a particular pixel are absorbed by the switchable polarizer 973.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" in this disclosure may include one or more processors, microprocessors, multi-core processors, Application-specific integrated circuits (ASIC), and/or Field Programmable Gate Arrays (FPGAs) to execute operations disclosed herein. In some embodiments, memories (not illustrated) are integrated into the processing logic to store instructions to execute operations and/or store data. Processing logic may also include analog or digital circuitry to perform the operations in accordance with embodiments of the disclosure.

A "memory" or "memories" described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

Networks may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, BlueTooth, SPI (Serial Peripheral Interface), I²C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention defined in the appended claims, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

## Claims

1. An optical device comprising:
a transparent conductor layer;
a driver module configured to drive a switching signal onto the transparent conductor layer, wherein the transparent conductor layer is configured to receive the switching signal; and
a metal layer configured to enter an extended state that increases a polarization-selective attenuation of the metal layer with respect to incident light when the switching signal is driven onto the transparent conductor layer.

2. The optical device of claim 1, wherein the metal layer is further configured to enter a curled state when the switching signal is not received by the transparent conductor layer, wherein, in the curled state, the cross-section of the metal layer with respect to the incident light is less than the cross-section of the metal layer in extended state of the metal layer,
and wherein a greater percentage of the incident light propagates through the optical device when the metal layer is in the curled state compared to the extended state of the metal layer.

3. The optical device of any preceding claim, wherein the metal layer includes a plurality of strips, and wherein the strips in the metal layer form chains of the strips in the extended state, and wherein the chains formed by the strips linearly polarize the incident light.

4. The optical device of any preceding claim, wherein the incident light is incident on the transparent conductor layer normal to a first plane of the transparent conductor layer.

5. The optical device of any preceding claim further comprising:
a transparent insulator layer disposed between the metal layer and the transparent conductor layer; and
a patterned adhesion layer disposed between the metal layer and the transparent insulator layer.

6. The optical device of any preceding claim, wherein the driver module is configured to modulate the switching signal to switch the metal layer between the extended state and a curled state to tune an average percentage of the incident light that propagates through the optical device.

7. The optical device of claim 6, wherein the driver module drives the switching signal so the metal layer stays in the curled state or the extended state for less than 50 ms.

8. The optical device of any preceding claim, wherein the metal layer includes chromium.

9. An optical element comprising:
a transparent conductor layer; and
a metal layer configured to form chains that linearly polarize incident light when a first voltage level is driven onto the transparent conductor layer, wherein the metal layer enters a transmissive state when a second voltage level is driven onto the transparent conductor layer, and wherein a higher percentage of the incident light propagates through the optical element in the transmissive state of the metal layer compared to the polarization state of the metal layer.

10. The optical element of claim 9, wherein a plurality of strips of the metal layer enter a curled state that reduces a cross-section of the strips with respect to the incident light when the metal layer is in the transmissive state.

11. The optical element of claim 9 or 10, wherein the incident light propagates normal to a first plane of the transparent conductor layer.

12. The optical element of any of claims 9 to 11 further comprising:
a transparent insulator layer disposed between the metal layer and the transparent conductor layer; and
a patterned adhesion layer disposed between the metal layer and the transparent insulator layer.

13. An optical device comprising:
a pixel driving module; and
a plurality of pixels, wherein the pixel driving module is configured to selectively drive each of the pixels in the plurality between a transmissive state and a polarization state, wherein each of the pixels in the plurality includes:
a transparent conductor layer; and
a metal layer configured to linearly polarize incident light when a first voltage level is driven onto the transparent conductor layer by the pixel driving module, and wherein the metal layer transmits a majority of the incident light when a second voltage level is driven onto the transparent conductor layer by the pixel driving module.

14. The optical device of claim 13, wherein the metal layer includes a plurality of strips, and wherein the strips in the metal layer form chains of the strips when the first voltage level is driven onto the transparent conductor layer, and wherein the chains formed by the strips linearly polarize the incident light.

15. The optical device of claim 14 further comprising:
a switchable polarizer layer, wherein lines of the switchable polarizer layer are disposed perpendicular to the chains formed by the strips.

16. The optical device of any of claims 13 to 15, wherein the incident light is incident normal to a first plane of the transparent conductor layer.

17. The optical device of any of claims 13 to 16 further comprising:
a transparent insulator layer disposed between the metal layer and the transparent conductor layer; and
a patterned adhesion layer disposed between the metal layer and the transparent insulator layer.

18. The optical device of any of claims 13 to 17, wherein the metal layer includes chromium.

19. The optical device of any of claims 13 to 18, wherein the pixel driving module is configured in an active-matrix configuration to actively drive each pixel in the plurality of pixels.

20. The optical device of any of claims 13 to 19, wherein the pixel driving module is configured in a passive-matrix configuration to drive each pixel in the plurality of pixels with voltages on voltage lines shared by the plurality of pixels.
